# DEMANDE DE BREVET EUROPEEN

(11) **EP 1 018 521 A1**
(43) Date de publication de la demande: **12.07.2000**
(21) Numéro de dépôt: 99126191.8
(22) Date de dépôt: 30.12.1999
(51) Int. Cl.: C08F 4/54

(54) **Procede de preparation de polymeres dieniques fonctionnalises amine, de tels polymeres, composition de caoutchouc et enveloppe de pneumatique comportant ces polymeres.**

(30) Priorité: 06.01.1999 FR 9900080
(71) Demandeur: Sociéte de Technologie Michelin, 63000 Clermont-Ferrand (FR); Michelin Recherche et Technique S.A., 1763 Granges-Paccot (CH)
(72) Inventeur: Favrot, Jean-Michel, 63800 Cournon D'Auvergne (FR); Laubry, Philippe, 63200 Marsat (FR)
(74) Mandataire: Hiebel, Robert

(57) **Abrégé**

La présente invention concerne un procédé de préparation de polymères diéniques fonctionnalisés amine, et à teneur en enchaînements 1,4-trans qui est égale ou supérieure à 70 %. L'invention concerne également de tels polymères, une composition de caoutchouc et une enveloppe de pneumatique comportant ces polymères.

Le procédé de préparation selon l'invention consiste à polymériser au moins un monomère diénique à l'aide d'un système catalytique lithié, lequel est constitué d'au moins un solvant hydrocarboné, d'un composé A d'un métal du groupe IIIA, d'un composé B d'un métal alcalino-terreux et d'un initiateur C amino-lithié.

Des polymères diéniques fonctionnalisés amine à haute teneur en enchaînements 1,4-trans selon l'invention sont tels que la fonction amine, située à l'extrémité de la chaîne polymérique, est une fonction amine tertiaire, le taux de fonctionnalisation desdits polymères étant égal ou supérieur à 50 % et la teneur en enchaînements 1,4-trans étant égale ou supérieure à 70 %.

Une composition de caoutchouc vulcanisable au soufre selon l'invention est telle qu'elle comporte au moins ledit polymère.

Une enveloppe de pneumatique selon l'invention est telle qu'elle comporte ladite composition.

## Description

La présente invention concerne un procédé de préparation de polymères diéniques fonctionnalisés amine, et à teneur en enchaînements 1,4-trans qui est égale ou supérieure à 70 %. L'invention concerne également de tels polymères, une composition de caoutchouc et une enveloppe de pneumatique comportant chacune ces polymères.

La demanderesse a décrit, dans le document de brevet français FR-A-2 294 186, un procédé de polymérisation de diènes conjugués ou de copolymérisation de diènes conjugués, soit avec d'autres diénes conjugués, soit avec des composés vinyl-aromatiques. Les exemples de polymères obtenus qui figurent dans ce document présentent des teneurs en enchaînements 1,4-trans couvrant un domaine étendu, lequel s'étend entre 24 % et 90 %.

Ce procédé consiste essentiellement à faire réagir les monomères en présence d'une composition catalytique constituée par un initiateur organolithien et par un co-catalyseur. Ce dernier comprend un composé du baryum ou du strontium et un composé organométallique de métaux des groupes IIB ou IIIA de la classification périodique des éléments.

Plus précisément, ledit initiateur organolithien peut être par exemple:
- un organolithien aliphatique, tel que l'éthyl-lithium, le n-butyl-lithium, l'isobutyl-lithium, le sec-butyl-lithium, le ter-butyl-lithium, l'isopropyl-lithium, le n-amyl-lithium, l'isoamyl-lithium;
- un organolithien alcénique, tel que l'allyl-lithium, le propényl-lithium, l'isobutényl-lithium;
- un polymère vivant, tel que le polybutadiényl-lithium, le polyisoprényl-lithium, le polystyryl-lithium;
- un polyméthylène dilithium, tel que le 1,4-dilithiobutane, le 1,5-dilithiopentane, le 1,20-dilithioeicosane;
- un organolithien aromatique, tel que le benzyl-lithium, le phényl-lithium, le 1,1-diphényl-méthyl-lithium;
- un polylithien obtenu à partir d'un composé éthylénique aryl-substitué, ce dernier étant par exemple le 1,1-diphényléthylène, le trans-stilbène, le tétraphényléthylène;
- un ion radical, tel que le lithium-naphtalène, le lithium-anthracène, le lithium-chrysène, le lithium-diphényle;
- un dérivé substitué par un ou plusieurs alcoyles.

Ledit composé du baryum ou du strontium est par exemple un hydrure, ou un sel d'acide organique mono ou polyfonctionnel, tel qu'un alcoolate.

Quant audit composé organométallique de métaux des groupes IIB ou IIIA, il s'agit par exemple d'un dialcoyl-zinc ou cadmium, d'un organoaluminique halogéné ou non, d'un organoborique, ou d'un hydrure de dialcoylaluminium.

On peut également citer le document de brevet américain US-A-4 996 273 qui divulgue un procédé de préparation par voie anionique de polybutadiène à taux d'enchaînements 1,4-trans compris entre 82 % et 91 %, qui consiste à utiliser un initiateur organolithien, un composé du baryum, du strontium ou du calcium et un trialkylaluminium ayant au moins 13 atomes de carbone.

On notera que ni ledit document FR-A-2 294 186, ni ledit document US-A-4 996 273 ne mentionnent l'obtention de polymères fonctionnels.

On connaît également, par le document de brevet européen EP-A-661 298, un procédé de préparation de polymères diéniques qui sont fonctionnalisés amine et qui comprennent un groupe alkoxysilane. Ces polymères sont notamment caractérisés par une teneur en enchaînements 1,2 comprise entre 14 % et 16 %, c'est-à-dire par une teneur globale en enchaînements 1,4-cis et 1,4-trans comprise entre 84 et 86 %, ce qui implique une teneur en enchaînements 1,4-trans qui est très sensiblement inférieure à 80 %, de l'ordre de 60 % au maximum.

Ce procédé consiste notamment à utiliser, d'une part, un initiateur catalytique à base d'un amidure de lithium et, d'autre part' un agent randomisant permettant de contrôler la teneur des enchaînements 1,2 dans les polymères préparés, puis à faire réagir avec un composé alcoxysilane le polymère vivant obtenu.

Ledit initiateur est par exemple l'hexaméthylène imidure de lithium.

Quant audit agent randomisant, il peut s'agir d'un éther, d'un ortho-diméthoxybenzène, d'un complexe de métal alcalin et d'une cétone ou de triesters d'acide phosphoreux, de dérivés oxygénés d'un métal alcalin ou alcalino-terreux, par exemple le lithium, le sodium, le potassium, le calcium ou le baryum, ou encore d'une amine tertiaire.

Tous les exemples de préparation figurant dans ce document se réfèrent à des procédés d'obtention de copolymères styrène-butadiène. Ces procédés consistent à ajouter directement ledit initiateur et ledit agent randomisant au milieu de polymérisation, qui est constitué des monomères styrène et butadiène et d'un solvant de polymérisation.

Concernant la préparation par voie anionique de polymères comprenant une fonction amine, on peut également citer le document de brevet européen EP-A-590 491. Ce document mentionne l'utilisation d'un initiateur aminolithien par exemple constitué d'hexaméthylèneimine, notamment pour l'obtention de copolymères de styrène et de butadiène présentant une distribution étroite de masses moléculaires. Les copolymères obtenus sont caractérisés par des taux d'enchaînements vinyliques d'au moins 34,9 %, c'est-à-dire par des taux d'enchaînements 1,4-trans et 1,4-cis au plus égaux à 65,1 %, ce qui implique une teneur encore plus réduite en enchaînements 1,4-trans.

Conformément à la présente invention, on a cherché à meure en oeuvre un nouveau procédé de polymérisation qui permette d'obtenir des polymères fonctionnalisés amine tertiaire en bout de chaîne et comportant un taux d'enchaînements 1,4-trans qui soit au moins de 70 %.

A cet effet, le procédé de préparation selon l'invention de polymères diéniques fonctionnalisés amine à teneur en enchaînements 1,4-trans égale ou supérieure à 70 %, qui consiste à polymériser au moins un monomère diénique à l'aide d'un système catalytique lithié, est caractérisé en ce que ledit système catalytique est constitué d'au moins un solvant hydrocarboné, d'un composé A d'un métal du groupe IIIA d'un composé B d'un métal alcalino-terreux et d'un initiateur C amino-lithié.

Comme exemples représentatifs des composés A utilisés, on peut citer les composés organométalliques suivants:
les organoaluminiques halogénés ou non tels que le triéthyl-aluminium, le tri-isobutyl-aluminium, le chlorure de diéthyl-aluminium, le diclilorure d'éthyl-aluminium, le sesquichlorure d'éthyl-aluminium, le sesquichlorure de méthyl-aluminium; les hydrures de dialcoyl-aluminium, tels que l'hydrure de diéthyl-aluminium, l'hydrure de diisobutyl-aluminium, etc.

De préférence, on utilise pour ledit composé A un trialkyl-aluminium dont le nombre d'atomes de carbone va de 1 à 12, avantageusement le trioctyl-aluminium.

Comme exemples représentatifs des composés B utilisés, on peut citer les composés suivants du baryum ou du strontium:
les hydrures H₂Ba et H₂Sr, les sels d'acides organiques mono ou polyfonctionnels de formules (R-COO)₂ Ba ou Sr, R₁-(COO)₂ Ba ou Sr, dans lesquelles R et R₁ sont des radicaux organiques, le premier monovalent et le second divalent, les thioacides correspondants, les alcoolates mono ou polyfonctionnels et les thiolates correspondants; les phénates mono ou polyfonctionnels et les thiophénates correspondants; les sels d'acides alcools et d'acides phénols de baryum ou de strontium et les thio-produits correspondants; les β-dicétonates de baryum ou de strontium tels que les produits de réaction du baryum ou du strontium avec l'acétylacétone, le dibenzoylméthane, la thénoyltrifluoro-acétone, la benzoyltrifluoro-acétone, la benzoyl-acétone; les dérivés organiques du baryum ou du strontium tels que ceux du 1,1-diphényléthylêne, du 1,2-acénaphtylène, du tétraphénylbutane, du α-méthyl-styrène, ou encore ceux tels que le diphényl baryum ou strontium, le biscyclopentadiényl baryum ou strontium, les trialcoylsilyl baryum ou strontium, le triphénylsilyl baryum ou strontium; les dérivés organiques mixtes tels que l'iodure de phényl-baryum, l'iodure de méthyl-strontium, les sels de baryum ou de strontium des amines secondaires; les métaux cétyles tels que la benzophénone baryum ou strontium, la cinnamone baryum ou strontium et les produits alcoylés correspondants ainsi que les homologues soufrés; les ions radicaux du baryum et du strontium tels que ceux du naphtalène, de l'anthracène, du chrysène, du diphényle, etc...

On peut également utiliser pour le composé B un alcoolate de calcium.

De préférence, on utilise pour ledit composé B un alcoolate de baryum, avantageusement l'éthyl diglycolate de baryum ou le nonylphénoxyde de baryum.

Quant audit initiateur amino-lithié C, il est de préférence constitué d'un amidure de lithium, ou d'un polymère obtenu par voie anionique qui présente une liaison C-Li et une fonction amine.

De préférence, ledit amidure de lithium répond à la formule Xli, avec X sous les formes X₁ ou X₂ répondant aux formules suivantes: 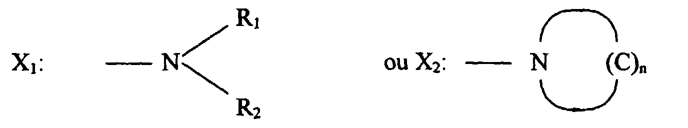 comme décrit par exemple dans l'ouvrage de T. C. CHENG, Anionic Polymerization, publié par l'American Chemical Society, Washington, p. 513, 1981, dont le contenu est incorporé à la présente description. La formule X₁ est telle que R₁ et R₂ sont chacun un groupe alkyle indépendamment l'un de l'autre, le nombre d'atomes de carbone de l'ensemble de R₁ et R₂ allant de préférence de 2 à 15. Quant à la formule X₂, elle comprend un groupe cycloalkyle, n étant un nombre entier allant de préférence de 2 à 15.

A titre préférentiel, R₁ et R₂ peuvent être chacun un radical éthyle, butyle, ou former ensemble un radical cycloalkyle ayant de 4 à 6 atomes de carbone.

Egalement selon une caractéristique préférentielle de l'invention, l'initiateur C est préparé en l'absence d'agent polaire.

A titre encore plus préférentiel, on utilise pour C le dibutyl amidure de lithium ou l'hexaméthylène imidure de lithium.
◇ Selon un premier mode de réalisation de l'invention, ledit système catalytique est constitué par un co-catalyseur, résultant du produit de réaction dans ledit solvant hydrocarboné dudit composé A et dudit composé B, et par ledit initiateur C.
   * Selon un premier exemple de réalisation de ce premier mode, le procédé de préparation selon l'invention consiste alors à mettre en oeuvre les étapes suivantes:
      - dans une première étape, on prépare ledit co-catalyseur en faisant réagir, dans ledit solvant hydrocarboné inerte, les deux composés métalliques A et B. Puis on chauffe le mélange obtenu de préférence à une température comprise entre 20° C et 120° C, encore préférentiellement entre 30° C et 50° C et pendant une durée suffisante pour permettre la réaction des deux composés A et B. Cette durée est généralement comprise entre 1 et 60 minutes, préférentiellement entre 20 et 40 minutes;
      - dans une seconde étape, on met en contact ledit co-catalyseur avec le milieu de polymérisation, par exemple constitué d'un ou de plusieurs monomères en solution dans un solvant de polymérisation;
      - dans une troisième étape, on adjoint au milieu de polymérisation ainsi obtenu ledit initiateur C, de sorte à faire réagir le mélange obtenu à ladite seconde étape, et l'on stoppe ultérieurement la réaction de polymérisation pour l'obtention desdits polymères, qui sont alors fonctionnalisés par une fonction amine en bout de chaîne. On récupère ces polymères comme connu en soi.
   * Selon un second exemple de réalisation de ce premier mode, dans lequel ledit initiateur C est constitué d'un polymère obtenu par voie anionique qui présente une liaison C-Li et une fonction amine, le procédé de préparation selon l'invention consiste alors à mettre en oeuvre les étapes suivantes:
      - une première étape est la même que celle décrite pour ledit premier exemple;
      - une seconde étape consiste à ajouter ledit initiateur polymérique C au pré-mélange obtenu à la première étape et formé par les composés A et B, éventuellement après avoir ajouté un composé alkyl lithien pour améliorer l'activité du système catalytique. De préférence, ce composé alkyl lithien est le butyl lithium.
      - une troisième étape consiste à ajouter le système catalytique ainsi obtenu audit milieu de polymérisation.
      Les conditions de température sont les mêmes que celles dudit premier exemple.
◇ Selon un second mode de réalisation de l'invention, dans lequel ledit initiateur C est constitué d'un polymère obtenu par voie anionique qui présente une liaison C-Li et une fonction amine, ledit système catalytique est constitué par un pré-mélange desdits composés A et C dans ledit solvant hydrocarboné et par ledit composé B. Plus précisément, on ajoute au milieu de polymérisation ledit pré-mélange contenant les composés A et C, puis on ajoute à tout cela ledit composé B.

Dans ces deux modes du procédé de préparation selon l'invention, on utilise une quantité des réactifs A et B telle que le rapport molaire A/B est compris entre 0,5 et 5, et préférentiellement entre 2,5 et 4. De plus, on utilise une quantité des deux réactifs B et C telle que le rapport molaire C/B est compris entre 0,2 et 4, et préférentiellement entre 1,5 et 4.

De plus, le solvant de polymérisation est de préférence un solvant hydrocarboné, de préférence le cyclohexane, et la température de polymérisation est comprise entre 20° C et 150° C, et préférentiellement entre 60° C et 110° C. Et la concentration en métal alcalino-terreux du système catalytique est comprise entre 0,01 mol.1⁻¹ et 0,5 mol.1⁻¹, de préférence entre 0,03 mol.1⁻¹ et 0,25 mol.1⁻¹.

On notera que la polymérisation selon l'invention peut être continue, discontinue ou encore être réalisée en masse. Les polymères peuvent être à blocs, statistiques, séquencés ou microséquencés.

Un polymère diénique fonctionnalisé amine à haute teneur en enchaînements 1,4-trans selon l'invention est tel que
- la fonction amine, située à l'extrémité de la chaîne polymérique, est une fonction amine tertiaire non cyclique ou cyclique greffée de telle sorte que le bout de chaîne du polymère réponde selon le cas à la formule 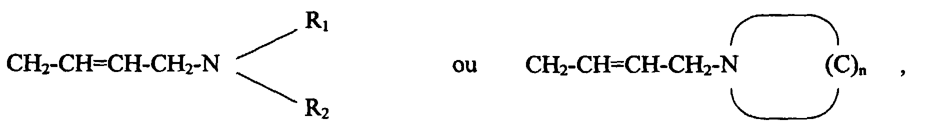 où R₁ et R₂ sont chacun un groupe alkyle indépendamment l'un de l'autre, le nombre d'atomes de carbone de l'ensemble de R₁ et R₂ allant de préférence de 2 à 15, n étant un nombre entier allant de préférence de 2 à 15,
- en ce que le taux de fonctionnalisation dudit polymère est égal ou supérieur à 50 %, et
- en ce que la teneur en enchaînements 1,4-trans est égale ou supérieure à 70 %.

Un tel polymère selon l'invention comprenant une fonction amine et présentant une haute teneur en structure 1, 4 trans est notamment destiné à être incorporé à une composition de caoutchouc vulcanisable au soufre comprenant une charge renforçante, laquelle peut être à base d'une charge blanche renforçante ou de noir de carbone.

On entend par charge blanche renforçante une charge blanche capable de renforcer à elle seule, sans autre moyen qu'un agent de liaison charge / matrice élastomère intermédiaire, une composition de caoutchouc destinée à la fabrication de pneumatiques, en d'autres termes capable de remplacer dans sa fonction de renforcement une charge conventionnelle de noir de carbone de grade pneumatique.

Une telle charge blanche renforçante peut par exemple être constituée de silice.

A titre de silice susceptible d'être utilisée dans une composition selon l'invention, conviennent toutes les silices précipitées ou pyrogénées connues de l'homme de l'art, présentant une surface BET de valeur égale ou inférieure à 450 m²/g et une surface spécifique CTAB de valeur égale ou inférieure à 450 m²/g, même si les silices précipitées hautement dispersibles sont préférées.

Par silice hautement dispersible, on entend toute silice ayant une aptitude à la désagglomération et à la dispersion dans une matrice polymérique très importante observable par microscopie électronique ou optique, sur coupes fines. La dispersibilité de la silice est également appréciée au moyen d'un test d'aptitude à la désagglomération aux ultrasons suivi d'une mesure, par diffraction sur un granulomètre, de la taille des particules de silice pour déterminer le diamètre médian (D50) des particules et le facteur de désagglomération (Fd) après désagglomération comme décrit dans le document de brevet EP-A-520 860 dont le contenu est incorporé ici, ou comme décrit également dans l'article paru dans la revue Rubber World (juin 1994), pp. 20-24, Dispersability Measurements of prc. silicas.

Comme exemples non limitatifs de telles silices hautement dispersibles préférentielles, on peut citer celles ayant une surface CTAB de valeur égale ou inférieure à 450 ml/g et particulièrement celles décrites dans les documents de brevet européens EP-A- 157 703 et EP-A-520 862, ou la silice Perkasil KS 430 de la société AKZO, les silices Zeosil 1165 MP et 85 MP de la société Rhodia, la silice HI-Sil 2 000 de la société PPG, les silices Zeopol 8741 ou 8745 de la société Huber.

Toutefois, conviennent à titre préférentiel les silices ayant:
- une surface spécifique CTAB de valeur comprise entre 30 et 250 m²/g, de préférence entre 60 et 200 m²/g.
- une surface spécifique BET de valeur comprise entre 30 et 300 m²/g, de préférence entre 70 et 240 m²/g,
- une prise d'huile DOP de valeur inférieure à 300 ml /100g, de préférence comprise entre 200 et 295 ml/100 g,
- un diamètre médian (D 50), après désagglomération aux ultrasons, égal ou inférieur à 3 microns, de préférence inférieur à 2,8 microns, par exemples inférieur à 2,5 microns,
- un facteur de désagglomération aux ultrasons (Fd) supérieur à 10 ml, de préférence supérieur à 11 ml, et plus préférentiellement égal ou supérieur à 21 ml,
- un rapport surface spécifique BET / surface spécifique CTAB dont la valeur est comprise entre 1,0 et 1,2.

L'état physique de la silice est indifférent, que ce soit sous forme de poudre, de microperles, de granulés, de billes.

Bien entendu, par silice, on entend également des coupages de différentes silices. La silice peut être utilisée seule ou en présence d'autres charges blanches. La valeur de la surface spécifique CTAB est déterminée selon la méthode de la norme NFT 45007 de novembre 1987. La valeur de la surface spécifique BET est déterminée selon la méthode de BRUNAUER, EMMET et TELLER qui est décrite dans "The Journal of the American Chemical Society, vol. 80, p. 309 (1938)", correspondant à la norme NFT 45007 de novembre 1987.

A titre de charge blanche renforçante, on peut également utiliser, à titre non limitatif,
- des alumines (de formule Al₂O₃), telles que les alumines à dispersibilité élevée qui sont décrites dans le document de brevet européen EP-A-810 258, ou encore
- des hydroxydes d'aluminium, tels que ceux décrits dans le document de brevet international WO-A-99/28376.

Selon un autre exemple de réalisation de la composition de l'invention, ladite charge renforçante peut être constituée de noir de carbone.

Comme noirs de carbone, conviennent tous les noirs commercialement disponibles ou conventionnellement utilisés dans les pneumatiques et particulièrement dans tes bandes de roulement. A titre d'exemples non limitatifs, on peut citer les noirs N234, N 339, N 326, et N375.

Les coupages noir/silice ou les noirs partiellement ou intégralement recouverts de silice conviennent également pour l'invention.

A titre de charge renforçante conviennent également les noirs de carbone modifiés par de la silice tels que, à titre non limitatif, les charges qui sont commercialisées par la société CABOT sous la dénomination 〈〈 CRX 2000 〉〉, et qui sont décrites dans le document de brevet international WO-A-96/37547.

Le taux de charge renforçante peut varier de 30 à 100 parties en poids pour 100 parties de polymère selon l'invention.

On notera que les polymères obtenus selon l'invention peuvent être avantageusement fonctionnalisés par différents agents électrophiles de couplage, pour donner une fonction interactive avec la charge précitée. On peut notamment citer, pour ces agents de couplage, des dérivés de l'étain tels que ceux cités dans le document de brevet japonais JP-A-1 135 847, des dérivés aminés tels que ceux cités dans les documents de brevet américains US-A-5 248 736, US-A-5 281 671, US-A-4 647 625 et US-A-5 001 196.

La composition de caoutchouc selon l'invention peut comprendre en outre de manière classique, lorsque la charge renforçante est une charge blanche renforçante, un agent de liaison charge blanche / matrice élastomère, qui a pour fonction d'assurer une liaison suffisante, de nature chimique et/ou physique, entre ladite charge blanche et la matrice, tout en facilitant la dispersion de cette charge blanche au sein de ladite matrice.

On peut par exemple utiliser des agents de liaison charge/polymère qui sont constitués des alcoxysilanes cités dans le document de brevet européen EP-A-692 493.

De plus, une composition de caoutchouc selon l'invention peut en outre contenir les autres constituants et additifs habituellement utilisés dans les mélanges de caoutchouc, tels que des plastifiants, des pigments, des antioxydants, des catalyseurs de condensation, du soufre, des accélérateurs de vulcanisation, des huiles d'extension, etc.

Avantageusement, la composition résultante selon l'invention présente, à l'état vulcanisé, des propriétés hystérétiques améliorées.

Une telle composition de caoutchouc selon l'invention est destinée à être incorporée à une enveloppe de pneumatique, avec une réduction de la résistance au roulement de celle-ci qui découle desdites propriétés hystérétiques améliorées.

Les caractéristiques précitées de la présente invention, ainsi que d'autres, seront mieux comprises à la lecture de la description suivante de plusieurs exemples de réalisation de l'invention, donnés à titre illustratif et non limitatif

Dans ce qui suit, le terme 〈〈 polymère 〉〉 couvre à la fois les homopolymères et les copolymères, le terme 〈〈 copolymêre 〉〉 couvrant les polymères obtenus chacun à partir de deux, ou plus de deux monomères, par exemple des terpolymères.

Par polymère diénique on entend tout homopolymère obtenu par polymérisation d'un monomère diène conjugué ayant de 4 à 12 atomes de carbone, tout copolymêre obtenu par copolymérisation d'un ou plusieurs diènes conjugués entre eux ou avec un ou plusieurs composés vinylaromatiques ayant de 8 à 20 atomes de carbone. A titre de diène conjugué, on peut citer notamment le butadiène-1,3, le 2-méthyl-1,3-butadiène, les 2,3-di(alcoyle en C1 à C5)-1,3-butadiène tels que, par exemple, le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, le phényl-1,3-butadiène, un aryl-1,3-butadiène, le 1,3-pentadiéne, le 2,4-hexadiène.

A titre de composés vinylaromatiques, conviennent notamment le styrène, l'ortho-, méta-, para-méthylstyrène, le mélange commercial 〈〈 vinyle-toluène 〉〉, le para-tertiobutylstyrène, les méthoxy-styrènes, les chloro-styrènes, le vinylmésithylène, le divinylbenzène, le vinylnaphtalène.

On a fait figurer ci-après, d'une part, deux exemptes (1 et 2) de procédés connus pour la préparation de polymères à teneur élevée en enchaînements 1,4-trans et, d'autre part, huit exemples préférentiels selon l'invention pour la préparation de polymères fonctionnalisés amine tertiaire ayant une teneur en enchaînements 1,4-trans supérieure à 60 % (exemples 3 à 8).

Les viscosités inhérentes mentionnées ci-après ont été établies à 25° C en solution à 0,1 g/dl dans le toluène.

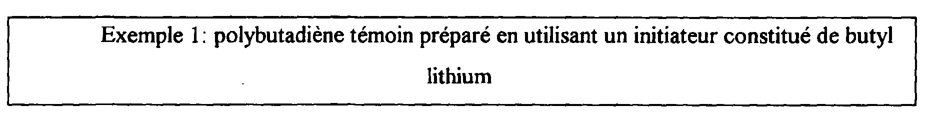

Dans 100 ml de cyclohexane, on introduit 150 ml d'une solution 0,87 M de trioctylaluminium dans le toluène et 24 ml d'une solution 1,56 M d'éthyl diglycolate de baryum, soit un rapport molaire A/B d'environ 3,49. Le mélange est chauffé à 40°C pendant 30 minutes.

On introduit une quantité de ce mélange correspondant à 1 790 micromoles de baryum dans un milieu contenant 227,5 g de butadiène et 1,45 l de cyclohexane. On ajoute ensuite une quantité de butyl lithium correspondant à un rapport de 2,12 par rapport à l'éthyl diglycolate de baryum. Le milieu est agité pendant 45 minutes à 70 °C. On ajoute alors 10 ml de méthanol et un volume d'une solution toluénique de 4,4'-méthylène-bis-2,6 ditertiobutylphénol, lequel volume correspond à 1,1 g de ce composé. Le solvant est évaporé sous vide et on obtient une quantité de 182 g de polymère, laquelle correspond à un taux de conversion du butadiène de 80%.

La viscosité inhérente du polymère est de 2,05 dl/g, sa viscosité Mooney ML (1+4) est de 24. Sa microstructure est:
- ◇ % enchaînements 1,2: : 2
- ◇ % enchaînements 1,4 trans: : 83
- ◇ % enchaînements 1,4 cis: : 15

L'indice de polymolécularité du polymère, déterminé par chromatographie par exclusion de taille, est de 1,21. Sa masse moléculaire moyenne en nombre, déterminée par osmométrie, est quant à elle de 96 000 g/mol.

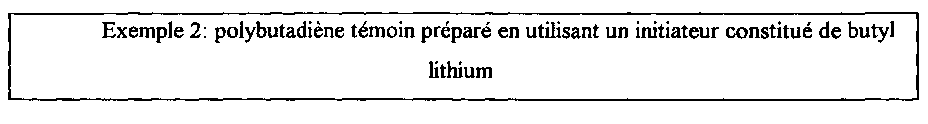

On reproduit le mode opératoire de l'exemple 1 à la différence que l'on adjoint au butadiène une quantité du mélange de trioctylaluminium et d'éthyl diglycolate de baryum correspondant à 1 020 micromoles d'éthyl diglycolate de baryum, et que l'on adjoint ensuite une quantité de butyl lithium de telle manière que le rapport molaire butyl lithium / éthyl diglycolate de baryum (C/B) soit de 2,62.

Après 45 minutes d'agitation du milieu de polymérisation à 70°C, on mesure un taux de conversion du butadiène de 83 %.

La viscosité inhérente du polymère est de 2,26 dl/g, sa viscosité Mooney ML (1+4) est de 46.

Sa microstructure est:
- ◇ % enchaînements 1,2: : 3
- ◇ % enchaînements 1,4 trans: : 82
- ◇ % enchaînements 1,4 cis: : 15

L'indice de polymolécularité du polymère, tel qu'il est déterminé par chromatographie par exclusion de taille, est de 1,29. Quant à sa masse moléculaire moyenne en nombre, déterminée par osmométrie, elle est de 136 000 g/mol.

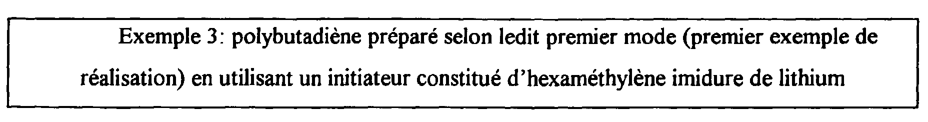

On reproduit le mode opératoire de l'exemple 1, à la différence qu'au lieu du butyl lithium, on utilise une quantité d'hexaméthylène imidure de lithium, de telle manière que le rapport molaire hexaméthylène imidure de lithium / éthyl diglycolate de baryum (rapport C/B) soit de 2,37.

Après 65 minutes d'agitation du milieu de polymérisation à 70 °C on mesure un taux de conversion du butadiène de 80 %.

La viscosité inhérente du polymère est de 2,18 dl/g, sa viscosité Mooney ML (1+4) est de 38.

Sa microstructure est:
- ◇ % enchaînements 1,2: : 4
- ◇ % enchaînements 1,4 trans: : 82
- ◇ % enchaînements 1,4 cis: : 4

L'indice de polymolécularité du polymère, déterminé par chromatographie par exclusion de taille est de 1,27. Quant à sa masse moléculaire moyenne en nombre, déterminée par osmométrie, elle est de 122 000 g/mol.

L'analyse du spectre RMN ¹H. lequel est réalisé sur un spectromètre 〈〈 BRUKER AC 200 〉〉, montre, à 2,95 ppm, un massif attribué au groupement méthylène C₆H₁₂N-**CH**_{**2**}-CH=CH-polymère. L'analyse quantitative de ce spectre donne un taux de fonctions de 4,63 milliéquivalents par kg d'élastomère ce qui, étant donné la masse moléculaire du polymère, correspond à un taux de fonctions amine de 56 %.

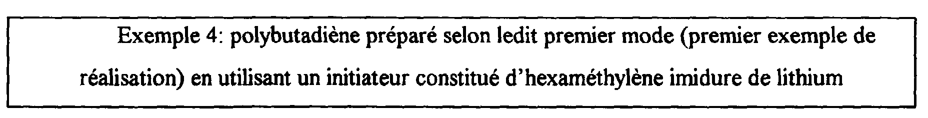

On reproduit le mode opératoire de l'exemple 2, à la différence qu'au lieu du butyl lithium on injecte dans le milieu de polymérisation une quantité d'hexaméthylène imidure de lithium correspondant à un rapport molaire C/B de 2,87.

Après 60 minutes d'agitation du milieu de polymérisation à 70 °C, on mesure un taux de conversion du butadiène de 83 %.

La viscosité inhérente du polymère est de 2,26 dl/g, sa viscosité Mooney ML (1+4) est de 51.

Sa microstructure est:
- ◇ % enchaînements 1,2: : 4
- ◇ % enchaînements 1,4 trans: : 81
- ◇ % enchaînements 1,4 cis: : 15

L'indice de polymolécularité du polymère, déterminé par chromatographie par exclusion de taille, est de 1,38. Sa masse moléculaire moyenne en nombre, déterminée par osmométrie, est quant à elle de 146 000 g/mol.

L'analyse quantitative du spectre RMN ¹H, comme dans l'exemple 3, donne un taux de fonctions de 5,19 milliéquivalents par kg d'élastomère ce qui, étant donné la masse moléculaire de ce polymère, correspond à un taux de fonctions amine de 76 %.

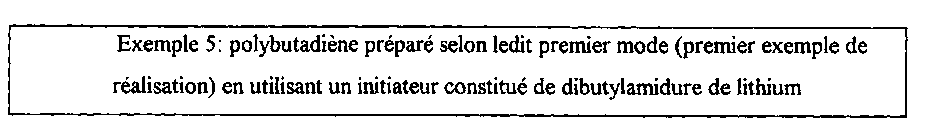

On reproduit le mode opératoire de l'exemple 1, à la différence qu'au lieu du butyl lithium on utilise une quantité de dibutylamidure de lithium avec un rapport molaire C/B de 2,37.

Après 65 minutes d'agitation du milieu de polymérisation à 70 °C, on mesure un taux de conversion du butadiène de 84 %.

La viscosité inhérente du polymère est de 1,97 dl/g, sa viscosité Mooney ML (1+4) est de 22.

Sa microstructure est de:
- ◇ % enchaînements 1,2: : 4
- ◇ % enchaînements 1,4 trans: : 81
- ◇ % enchaînements 1,4 cis: : 15

L'indice de polymolécularité du polymère, déterminé par chromatographie par exclusion de taille, est de 1,26. Quant à sa masse moléculaire moyenne en nombre, déterminée par osmométrie, elle est de 92 000 g/mol.

L'analyse du spectre RMN ¹H montre, à 2,95 ppm, un massif attribué au groupement méthylène (butyl)₂N-**CH**_{**2**}-CH=CH-polymère. L'analyse quantitative de ce spectre donne un taux de fonctions de 7,59 milliéquivalents par kg d'élastomère ce qui, étant donné la masse moléculaire du polymère, correspond à un taux de fonctions amine de 70 %.

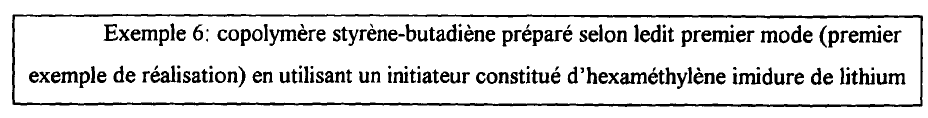

Dans 100 ml de cyclohexane, on introduit 150 ml d'une solution 0,87 M de trioctylaluminium dans du toluène, et 24 ml d'une solution 1,56 M d'éthyl diglycolate de baryum, soit selon le rapport molaire A/B de l'exemple 1. Le mélange est chauffé à 40 °C pendant 30 minutes.

On introduit une quantité de ce mélange correspondant à 1 100 micromoles de baryum dans un milieu contenant 110 g de butadiène, 90 g de styrène et 1,3 l de cyclohexane. On ajoute ensuite une quantité d'hexaméthylène imidure de lithium avec un rapport molaire C/B de 2,74. Le milieu est agité pendant 60 minutes à 70 °C. On ajoute alors 10 ml de méthanol et un volume d'une solution toluénique de 4,4'-méthylène-bis-2,6 ditertiobutylphénol, lequel volume correspond à 0,72 g de ce composé. Le solvant est évaporé sous vide et on obtient un taux de conversion des monomères de 58 %.

La viscosité inhérente du polymère est de 1,5 dl/g et la masse moléculaire moyenne en nombre est de 110 000 g/mol.

Sa microstructure est:
- ◇ % styrène: : 30

Microstructure de la partie butadiénique:
- ◇ % enchaînements 1,2: : 3
- ◇ % enchaînements 1,4 trans: : 83
- ◇ % enchaînements 1,4 cis: : 14

L'indice de polymolécularité du polymère, déterminé par chromatographie par exclusion de taille, est de 1,42.

L'analyse quantitative du spectre RMN ¹H, comme dans l'exemple 3, donne un taux de fonctions de 5,4 milliéquivalents par kg d'élastomère ce qui, étant donné la masse moléculaire du polymère, correspond à un taux de fonctions amine de 60 %.

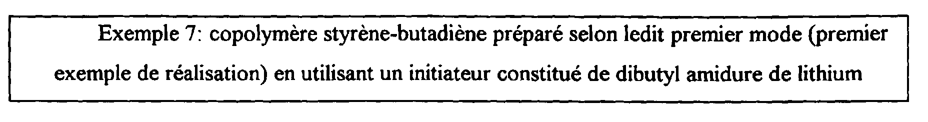

Dans 100 ml de cyclohexane, on introduit comme à l'exemple précédent 150 ml d'une solution 0,87 M de trioctylaluminium dans du toluène, et 24 ml d'une solution 1,56 M d'éthyl diglycolate de baryum. Le mélange est chauffé à 40 °C pendant 30 minutes.

On introduit une quantité de ce mélange correspondant à 840 micromoles de baryum dans un milieu contenant 104 g de butadiène, 96 g de styrène et 1,3 l de cyclohexane. On ajoute ensuite une quantité de dibutyl amidure de lithium avec un rapport molaire C/B de 2,74. Le milieu est agité pendant 60 minutes à 70 °C. On ajoute alors 10 ml de méthanol et un volume d'une solution toluénique de 4,4'-méthylène-bis-2,6 ditertiobutylphénol correspondant à 0,72 g de ce composé.

La durée de la polymérisation est de 23 minutes et le taux de conversion est de 63 %.

La viscosité inhérente du polymère est de 1,38 dl/g, et sa viscosité Mooney ML (1+4) est de 41. Quant à sa masse moléculaire moyenne en nombre, déterminée par osmométrie, elle est de 140 000 g/mol.

Sa microstructure est:
- % styrène: : 29

Microstructure de la partie butadiénique:
- ◇ % enchaînements 1,2: : 4
- ◇ % enchaînements 1,4 trans: : 80
- ◇ % enchaînements 1,4 cis: : 16

L'indice de polymolécularité du polymère, déterminé par chromatographie par exclusion de taille, est de 1,41.

L'analyse quantitative du spectre RMN 1H, comme dans l'exemple 5, donne un taux de fonctions de 5,7 milliéquivalents par kg d'élastomère ce qui, étant donné la masse moléculaire du polymère, correspond à un taux de fonctions amine de 80 %.

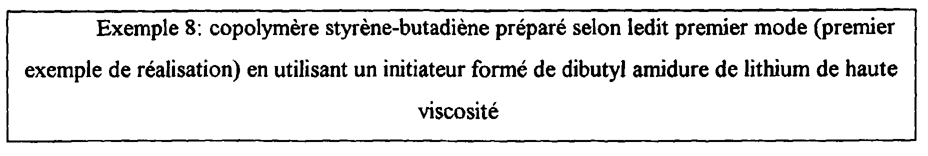

On reproduit le mode opératoire de l'exemple 7, à la différence que l'on utilise une quantité du pré-mélange de trioctyl aluminium et d'éthyl diglycolate de baryum correspondant à 470 micromoles d'éthyl diglycolate de baryum. Après 33 minutes de polymérisation à 70 °C, on mesure un taux de conversion de 62,5 %.

La viscosité Mooney du polymère est de 111 et la masse moléculaire moyenne en nombre, déterminée par osmométrie, est de 195 000 g/mol. Une partie de la solution polymérique est étendue avec 35,5 parties par rapport à l'élastomère d'huile aromatique et l'on obtient après séchage une viscosité Mooney ML (1+4) de 51.

Sa microstructure est:
- ◇ % styrène: : 29

Microstructure de la partie butadiénique:
- ◇ % enchaînements 1,2: : 3
- ◇ % enchaînements 1,4 trans: : 80
- ◇ % enchaînements 1,4 cis: : 17

L'indice de polymolécularité du polymère, déterminé par chromatographie par exclusion de taille, est de 1,43.

L'analyse quantitative du spectre RMN ¹H, comme dans l'exemple 5, donne un taux de fonctions de 3,7 milliéquivalents par kg d'élastomère ce qui, étant donné la masse moléculaire du polymère, correspond à un taux de fonctions amine de 70 %.

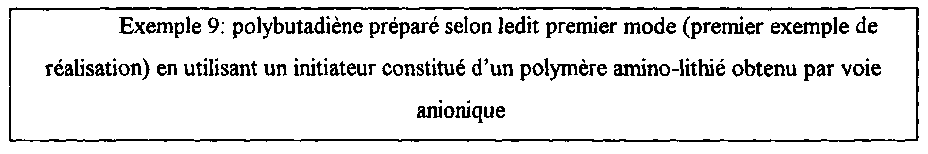

Dans 100 ml de cyclohexane, on introduit 26 g de butadiène et 4815 micromoles d'hexaméthylène imidure de lithium. Après 7 heures de polymérisation à 25° C, on obtient un polybutadiène C amino-lithié et l'on mesure 100 % de conversion du butadiène.

Puis, dans 10 ml de cyclohexane, on introduit 20 ml d'une solution 1,075 M de trioctylaluminium (A) dans le cyclohexane, et 4 ml d'une solution 1,54 M d'éthyl diglycolate de baryum (B) dans le cyclohexane. Ce mélange est chauffé pendant 30 minutes à 40° C.

On introduit une quantité de ce mélange correspondant à 91 micromoles de baryum dans un milieu contenant 22,75 g de butadiène et 145 ml de cyclohexane. On ajoute ensuite une quantité du polymère C précédemment obtenu correspondant à un rapport molaire C/B de 2,12.

Après 40 minutes de polymérisation à 70° C, on mesure un taux de conversion de 84 %. La viscosité inhérente du polymère est de 1,66 dl/g, sa viscosité Mooney ML(1+4) est de 30, la masse moléculaire déterminée par osmométrie est de 104000 g/mol, et l'indice de polymolécularité, déterminé par la technique SEC, est de 1,2.

La microstructure du polymère finalement obtenu est:
- % enchaînements 1,4 trans: 76
- % enchaînements 1,4 cis: 17
- % enchaînements 1,2: 7.

Le taux de fondions, déterminé comme dans l'exemple 3 par RMN, est de 8 méq/kg ce qui, compte tenu de la masse moléculaire du polymère, correspond à un taux de fonctions de 80%.

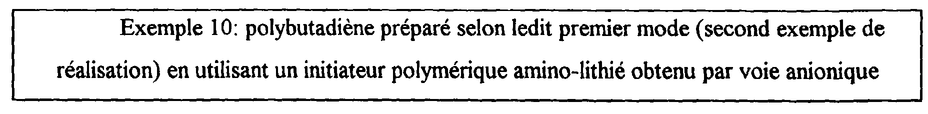

Dans 25 ml de cyclohexane, on procède à un pré-mélange de 21,7 millimoles de trioctylaluminium et de 6,16 millimoles d'éthyl diglycolate de baryum. Après 20 minutes d'agitation de ce milieu à 40° C, on ajoute dans 25 ml de cyclohexane une quantité de ce pré-mélange correspondant à 893 micromoles de baryum et 446 micromoles de butyl lithium. Après 10 minutes d'agitation à 40° C, on ajoute 1660 micromoles d'un polymère amino-lithié C qui est synthétisé comme dans l'exemple 9. On injecte une quantité de cyclohexane qui est ajustée de telle sorte que le volume total de la solution catalytique soit de 60 ml.

Après 10 minutes d'agitation à 40° C, on injecte une quantité de cette solution correspondant à 179 micromoles de baryum à un milieu contenant 145 ml de cyclohexane et 22,75 g de butadiène.

Après 50 minutes de polymérisation à 70° C, on mesure un taux de conversion de 100 %. La viscosité inhérente du polymère est de 1,17 dl/g, la masse moléculaire déterminée par osmométrie est de 70000 g/mol et l'indice de polymolécularité, déterminé par la technique SEC, est de 1,36.

La microstructure du polymère obtenu est:
- % enchaînements 1,4 trans: 74
- % enchaînements 1,4 cis: 18
- % 1,2: 8.

Le taux de fonctions déterminé par RMN, comme dans l'exemple 3, est de 8,9 méq/kg ce qui, compte tenu de la masse moléculaire du polymère, correspond à un taux de fonctions de 60 %.

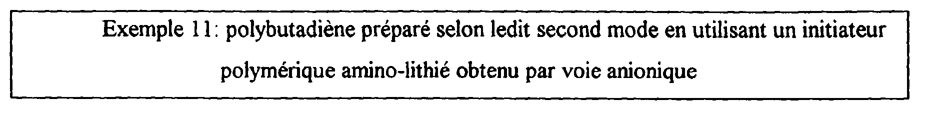

On procède au pré-mélange de 2 millimoles de trioctylaluminium et du polymère amino-lithié C synthétisé à l'exemple 9, dans 65 ml de cyclohexane. Après 20 minutes d'agitation à 25° C, on ajoute une quantité de ce mélange correspondant à 182 micromoles d'aluminium à un milieu contenant 145 ml de cyclohexane et 22,75 g de butadiène, puis on introduit une quantité d'éthyl diglycolate de baryum correspondant à 91 micromoles de baryum.

Après 40 minutes de polymérisation à 70° C, on mesure un taux de conversion de 84 %. La viscosité inhérente du polymère est de 1,86 dl/g, sa viscosité Mooney ML (1+4) est de 30; la masse moléculaire, déterminée par osmométrie, est de 105000 g/mol et l'indice de polymolécularité, déterminé par SEC, est de 1,6.

La microstructure du polymère est:
- enchaînements 1,4 trans: 77
- enchaînements 1,4 cis: 17
- enchaînements 1,2: 6.

Le taux de fonctions, déterminé par RMN (comme dans l'exemple 3), est de 6,85 méq/kg ce qui, compte tenu de la masse moléculaire du polymère, correspond à un taux de fonctions de 70 %.

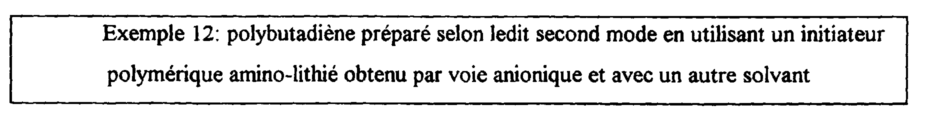

On synthétise un polymère amino-lithié C selon la méthode décrite à l'exemple 9, à la différence que l'on utilise le toluène comme solvant et que la durée de la polymérisation est de 5 heures et 30 minutes.

On procède au pré-mélange de 2 millimoles de trioctylaluminium et de ce polymère C que l'on vient de synthétiser, dans 65 ml de toluène. Après 20 minutes d'agitation à 25° C, on ajoute une quantité de ce mélange correspondant à 182 micromoles d'aluminium à un milieu contenant 145 ml de cyclohexane et 22,75 g de butadiène, puis on introduit une quantité d'éthyl diglycolate de baryum correspondant à 91 micromoles de baryum.

Après 40 minutes de polymérisation à 70° C, on mesure un taux de conversion de 76 %. La viscosité inhérente du polymère est de 1,65 dl/g; la masse moléculaire, déterminée par osmométrie, est de 94000 g/mol et l'indice de polymolécularité, déterminé par SEC, est de 1,81.

La microstructure du polymère est:
- % enchaînements 1,4 trans: 76
- % enchaînements 1,4 cis: 18
- % enchaînements 1,2: 6.

Le taux de fonctions, déterminé par RMN (comme dans l'exemple 3), est de 6,85 méq/kg ce qui, compte tenu de la masse moléculaire du polymère, correspond à un taux de fonctions de 65 %.

Les résultats obtenus aux exemples 3 à 12 selon l'invention mettent en évidence, d'une part, un taux d'enchaînements 1, 4-trans supérieur à 70 % et, d'autre part, un taux de fonctionnalisation amine d'au moins 56 %.

On notera que le procédé de polymérisation anionique selon l'invention pour la préparation de polymères présentant les caractéristiques précitées est mis en oeuvre sans ajout d'agent polaire, lequel est usuellement destiné à solubiliser un initiateur à base d'un amidure de lithium.

On notera également que les polymères obtenus selon le procédé de l'invention présentent une viscosité réduite, qui est comparable aux viscosités obtenues avec un initiateur constitué de butyl lithium (exemples 1 et 2).

On notera en outre que l'on peut neutraliser les impuretés du milieu de polymérisation par l'adjonction de butyl lithium.

On a fait figurer ci-après deux séries d'expériences qui mettent en évidence cette amélioration des propriétés hystérétiques, respectivement pour des compositions chargées à la silice et au noir de carbone.

Dans ces expériences, les propriétés des compositions sont évaluées comme suit:
- modules d'allongement à 10% (MA10), à 100% (MA100) et à 300% (MA300) mesurés suivant la norme ISO37;
- indice de cassage Scott mesuré à 20° C et à 100° C (force à la rupture en Mpa / allongement à la rupture %);
- pertes hystérétiques mesurées à 60° C en %;
- propriétés dynamiques en cisailllement: mesures effectuées en fonction de la déformation à 23° C et à 10 Hz. La non-linéarité, exprimée en Mpa, est la différence de module entre 0,15 et 50 % de déformation crête-crête.

L'hystérèse est exprimée par la mesure de tgδ à 7 % de déformation selon la norme ASTM D2231-71.

### Première série d'expériences: mélange silice:

On a cherché à meure en évidence dans cette série d'expériences la contribution, à l'intérieur d'une composition C1 (proche de celle d'une bande de roulement de pneumatique), d'un coupage caoutchouc naturel (NR) / polybutadiène 〈〈 BR3 〉〉 préparé selon l'invention.

Ce polybutadiène 〈〈 BR3 〉〉 est préparé comme décrit à l'exemple 3 ci-dessus, à la différence que l'on injecte, d'une part, une quantité de la solution co-catalytique correspondant à une quantité de baryum de 1250 micromoles et, d'autre part, une quantité d'hexaméthylène imidure de lithium correspondant à un rapport molaire C/B de 2,75. Après 50 minutes de polymérisation à 70° C, on mesure un taux de conversion du butadiène de 85 %.

La masse moléculaire moyenne en nombre de ce polymère 〈〈 BR3 〉〉, déterminée par osmométrie, est de 105000 g/mol.

La viscosité inhérente de ce polymère est de 1,67 dl/g, sa viscosité Mooney ML(1+4) étant de 28.

Sa microstructure est:
- % enchaînements 1,2: 3.
- % enchaînements 1,4 trans: 79.
- % enchaînements 1,4 cis: 18.

L'analyse du spectre RMN ¹H donne, comme dans l'exemple 3, un taux de fonctions amine de 6,7 méq/kg ce qui, étant donnée la masse moléculaire du polymère, correspond à un taux de fonctions de 70 %.

On a utilisé, comme coupage témoin, un coupage polybutadiène 〈〈 BR1 〉〉 préparé selon l'invention / caoutchouc naturel (NR).

Ce polybutadiène témoin est préparé comme décrit à l'exemple 1 ci-dessus, à la différence que l'on injecte, d'une part, une quantité de la solution co-catalytique correspondant à une quantité de baryum de 1820 micromoles et, d'autre part, une quantité de butyl lithium correspondant à un rapport C/B de 2,2. Après 45 minutes de polymérisation à 70° C, on mesure un taux de conversion du butadiène de 79 %.

La viscosité inhérente du polymère est de 1,88 dl/g, sa viscosité Mooney ML(1+4) étant de 30. Sa microstructure est:
- % enchaînements 1,2: 3.
- % enchaînements 1,4 trans: 82.
- % enchaînements 1,4 cis: 15. L'indice de polymolécularité du polymère, déterminé par chromatographie par exclusion de taille, est de 1,3. Quant à sa masse moléculaire moyenne en nombre, déterminée par osmométrie, elle est de 105 000 g/mol.

La formulation des gommes de composition C1 est la suivante (parties en poids):

| | |
|---|---|
| NR/〈〈 BR1 〉〉 ou NR/〈〈 BR3 〉〉 | 80/20 |
| silice ZEOSIL 1165 MP | 50 |
| ZnO | 3,0 |
| acide stéarique | 2,5 |
| N-1,3-diméthylbutyl-N'-phényl-p-phénylénediamine | 2,5 |
| paraffine | 1,0 |
| soufre | 1,5 |
| N-cyclohexyl-benzothiazyl-sulfénamide (CBS) | 1,8. |

On soumet les gommes selon cette composition C1 à un travail thermo-mécanique en deux étapes qui durent respectivement 5 minutes et 4 minutes, pour une vitesse moyenne des palettes de 45 tours/min, et jusqu'à atteindre une température maximale de tombée de 160° C, tandis que l'étape d'incorporation du soufre et des accélérateurs est effectuée à 30° C sur outil à cylindres.

On vulcanise ensuite ces gommes à 150° C et pendant 50 minutes.

Le tableau ci-dessous rend compte des propriétés à l'état non vulcanisé et vulcanisé de la composition C1, selon qu'elle contient le mélange polymère témoin NR/〈〈 BR1 〉〉 ou le mélange polymère selon l'invention NR/〈〈 BR3 〉〉:

| | **C1 avec NR/〈〈 BR3 〉〉** | **C1 avec NR/〈〈 BR1 〉〉** |
|---|---|---|
| | | |

| - Etat non vulcanisé | | |
|---|---|---|
| ML(1+4) à 100°C | 65 | 61 |

| - Etat vulcanisé | | |
|---|---|---|
| Shore | 63,4 | 63,5 |
| MA10 | 4,79 | 4,87 |
| MA100 | 1,92 | 1,94 |
| MA300 | 2,32 | 2,25 |
| MA300/MA100 | 1,21 | 1,16 |
| Scott à 20° C: Force rupture | 23,0 | 23,0 |
| Allongement rupture (%) | 500 | 500 |
| Pertes 60° C (déformation = 40 %) | 17,3 | 18,6 |

| - Propriétés dynamiques (entre 0.15 % et 50 % de déformation / 10 Hz) | | |
|---|---|---|
| Delta G* à 23° C | 1,87 | 2,25 |
| tgδₘₐₓ à 23°C | 0,140 | 0,150 |

En conclusion, il apparaît que la composition C1 contenant un polymère 〈〈 BR3 〉〉 selon l'invention présente une hystérèse réduite à faible et à forte déformation (pertes à 60° C et tgδ à 23° C, respectivement), par rapport à la composition C1 contenant le polymère témoin 〈〈 BR1 〉〉.

Il en résulte un échauffement réduit pour cette composition selon l'invention et, par conséquent, une résistance au roulement également réduite pour une enveloppe de pneumatique comportant ladite composition selon l'invention.

### Deuxième série d'expériences: mélange noir de carbone:

On a cherché ici à mettre en évidence la contribution, à l'intérieur d'une composition C2 (également proche de celle d'une bande de roulement d'enveloppe de pneumatique), d'un coupage caoutchouc naturel (NR) / polybutadiène 〈〈 BR3 〉〉précité.

On a utilisé, comme coupage témoin, le coupage précité polybutadiène 〈〈 BR1 〉〉/ NR.

La formulation des gommes de composition C2 est la suivante (parties en poids):

| | |
|---|---|
| NR/〈〈 BR1 〉〉 ou NR/〈〈 BR3 〉〉 | 60/40 |
| noir de carbone N234 | 54 |
| ZnO | 3,0 |
| acide stéarique | 1,5 |
| N-1,3-diméthylbutyl-N'-phényl-p-phénylènediamine (antioxydant) | 2,0 |
| paraffine | 1,0 |
| soufre | 1,1 |
| N-cyclohexyl-benzothiazyl-sulfénamide (CBS) | 1,1. |

On introduit les gommes de composition C2 à 90° C, on opère un travail thermomécanique jusqu'à 100° C puis on ajoute le noir de carbone, le ZnO, l'acide stéarique, la paraffine et l'anti-oxydant. La tombée se fait à 165° C après un coup de piston à 150° C.et l'on procède à l'incorporation du soufre et des accélérateurs.

On vulcanise ensuite la composition C2 à 150° C et pendant 50 minutes.

Le tableau ci-dessous rend compte des propriétés à l'état non vulcanisé et vulcanisé de la composition C2, selon qu'elle contient le mélange polymère témoin NR/〈〈 BR1 〉〉 ou le mélange polymère selon l'invention NR/〈〈 BR3 〉〉:

| | **C2 avec NR/〈〈 BR3 〉〉** | **C2 avec NR/〈〈 BR1 〉〉** |
|---|---|---|
| | | |

| - Etat non vulcanisé | | |
|---|---|---|
| ML(1+4) à 100°C | 113 | 107 |

| - Etat vulcanisé | | |
|---|---|---|
| Shore | 65,5 | 68,6 |
| MA10 | 5,58 | 6,52 |
| MA100 | 2,00 | 2,25 |
| MA300 | 2,56 | 2,60 |
| MA300/MA100 | 1,28 | 1,16 |
| Scott à 20° C: Fr | 24,0 | 23,0 |
| Ar(%) | 500 | 500 |
| Pertes 60° C (déformation = 40 %) | 28 | 30,8 |

| - Propriétés dynamiques (déformation = 0.15 % - 50 % / 10 Hz) | | |
|---|---|---|
| Delta G* à 23° C | 1,86 | 3,00 |
| tgδₘₐₓ à 23°C | 0,165 | 0,185 |

En conclusion, il apparaît que la composition C2 contenant un polymère 〈〈 BR3 〉〉 selon l'invention présente également une hystérése réduite à faible et à forte déformation (pertes à 60° C et tgδ à 23° C), par rapport à la composition C1 contenant le polymère témoin 〈〈 BR1 〉〉.

Il en résulte un échauffement réduit pour cette composition selon l'invention et, par conséquent, une résistance au roulement également réduite pour une enveloppe de pneumatique comportant ladite composition selon l'invention.

## Revendications

1. Procédé de préparation de polymères diéniques fonctionnalisés amine et à haute teneur en enchaînements 1,4-trans consistant à polymériser au moins un monomère diénique à l'aide d'un système catalytique lithié, caractérisé en ce que ledit système catalytique est constitué d'au moins un solvant hydrocarboné, d'un composé A d'un métal du groupe IIIA, d'un composé B d'un métal alcalino-terreux et d'un initiateur C amino-lithié.

2. Procédé de préparation de polymères diéniques fonctionnalisés amine et à haute teneur en enchaînements 1,4-trans selon la revendication 1, caractérisé en ce que ledit système catalytique est constitué par un co-catalyseur, résultant du produit de réaction dans ledit solvant hydrocarboné dudit composé A et dudit composé B, et par ledit initiateur C.

3. Procédé de préparation de polymères diéniques fonctionnalisés amine et à haute teneur en enchaînements 1,4-trans selon la revendication 2, caractérisé en ce qu'il consiste,
- dans une première étape, à préparer ledit co-catalyseur en faisant réagir l'un avec l'autre lesdits composés métalliques A et B dans ledit solvant hydrocarboné, puis
- dans une seconde étape, à mettre en contact ledit co-catalyseur avec un ou plusieurs monomères,
- dans une troisième étape, à faire réagir le mélange obtenu à ladite seconde étape par l'intermédiaire dudit initiateur C,
et en ce qu'il consiste à stopper ultérieurement la réaction de polymérisation pour obtenir lesdits polymères qui sont fonctionnalisés par une fonction amine en bout de chaîne.

4. Procédé de préparation de polymères diéniques fonctionnalisés amine et à haute teneur en enchaînements 1,4-trans selon la revendication 2, caractérisé en ce qu'il consiste à utiliser pour ledit initiateur C un polymère obtenu par voie anionique qui présente une liaison C-Li et une fonction amine et en ce qu'il consiste:
- dans une première étape, à effectuer un pré-mélange desdits composés A et B,
- dans une seconde étape, à ajouter ledit initiateur polymérique C au pré-mélange obtenu à la première étape,
- dans une troisième étape, à ajouter le système catalytique ainsi obtenu à un ou plusieurs monomères,
et en ce qu'il consiste à stopper ultérieurement la réaction de polymérisation pour obtenir lesdits polymères qui sont fonctionnalisés par une fonction amine en bout de chaîne.

5. Procédé de préparation de polymères diéniques fonctionnalisés amine et à haute teneur en enchaînements 1,4-trans selon la revendication 4, caractérisé en ce qu'il consiste à ajouter un composé alkyl lithien, tel que le butyl lithium, pour améliorer l'activité dudit système catalytique, entre ladite première étape et ladite seconde étape.

6. Procédé de préparation de polymères diéniques fonctionnalisés amine et à haute teneur en enchaînements 1,4-trans selon la revendication 1, caractérisé en ce qu'il consiste à utiliser pour ledit initiateur C un polymère obtenu par voie anionique qui présente une liaison C-Li et une fonction amine et en ce qu'il consiste:
- dans une première étape, à effectuer un pré-mélange desdits composés A et C dans ledit solvant hydrocarboné,
- dans une seconde étape, à ajouter à un ou plusieurs monomères ledit pré-mélange et,
- dans une troisième étape, à ajouter au mélange obtenu à ladite seconde étape ledit composé B,
et en ce qu'il consiste à stopper ultérieurement la réaction de polymérisation pour obtenir lesdits polymères qui sont fonctionnalisés par une fonction amine en bout de chaîne.

7. Procédé de préparation de polymères diéniques fonctionnalisés amine et à haute teneur en enchaînements 1,4-trans selon une des revendications 1 à 3, caractérisé en ce qu'il consiste à utiliser pour ledit initiateur amino-lithié C un amidure de lithium de formule Xli, avec X sous la forme: 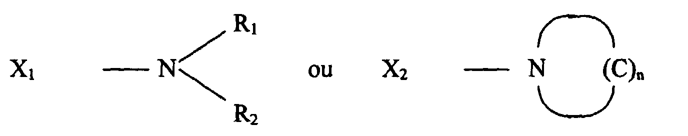 où X₁ est telle que R₁ et R₂ sont chacun un groupe alkyle indépendamment l'un de l'autre, le nombre d'atomes de carbone de l'ensemble de R₁ et R₂ allant de 2 à 15, et X₂ comprend un groupe cycloalkyle, n étant un nombre entier allant de 2 à 15.

8. Procédé de préparation selon la revendication 7, caractérisé en ce qu'il consiste à utiliser, pour ledit composé C, le dibutyl amidure de lithium ou l'hexaméthylène imidure de lithium.

9. Procédé de préparation selon une des revendications précédentes, caractérisé en ce qu'il consiste à utiliser, pour ledit composé A, un trialkyl-aluminium dont le nombre d'atomes de carbone va de 1 à 12.

10. Procédé de préparation selon la revendication 9, caractérisé en ce qu'il consiste à utiliser, pour ledit composé A, le trioctyl-aluminium.

11. Procédé de préparation selon une des revendications précédentes, caractérisé en ce qu'il consiste à utiliser, pour ledit composé B, un alcoolate de baryum, de strontium ou de calcium.

12. Procédé de préparation selon la revendication 11, caractérisé en ce qu'il consiste à utiliser, pour ledit composé B, l'éthyl diglycolate ou le nonylphénoxyde de baryum.

13. Procédé de préparation selon une des revendications 3 à 5, caractérisé en ce qu'il consiste, dans ladite première étape, à effectuer ledit pré-mélange desdits composés A et B dans ledit solvant hydrocarboné de telle manière que le rapport molaire A/B soit compris entre 0,5 et 5, puis à chauffer ledit pré-mélange à une température comprise entre 20° C et 120° C.

14. Procédé de préparation selon une des revendications précédentes, caractérisé en ce que ledit solvant hydrocarboné est constitué de toluène et/ou de cyclohexane.

15. Procédé de préparation selon une des revendications précédentes, caractérisé en ce qu'il consiste à faire en sorte que le rapport molaire C/B soit compris entre 0,2 et 4.

16. Système catalytique destiné à l'obtention de polymères diéniques fonctionnalisés amine à haute teneur en enchaînements 1,4-trans, caractérisé en ce qu'il est constitué d'au moins un solvant hydrocarboné, d'un composé A d'un métal du groupes IIIA, d'un composé B d'un métal alcalino-terreux, et d'un initiateur C amino-lithié constitué d'un amidure de lithium ou d'un polymère obtenu par voie anionique présentant une liaison C-Li et une fonction amine.

17. Polymère diénique fonctionnalisé amine à haute teneur en enchaînements 1,4-trans, caractérisé en ce que
- la fonction amine, située à l'extrémité de la chaîne polymérique, est une fonction amine tertiaire non cyclique ou cyclique greffée de telle sorte que le bout de chaîne du polymère réponde selon le cas à la formule 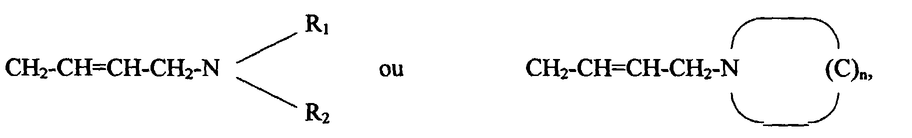 où R₁ et R₂ sont des groupe alkyle, le nombre d'atomes de carbone de l'ensemble de R₁ et R₂ allant de 2 à 15, n étant un nombre entier allant de 2 à 15,
- en ce que le taux de fonctionnalisation dudit polymère est égal ou supérieur à 50 %, et
- en ce que la teneur en enchaînements 1,4-trans est égale ou supérieure à 70 %.

18. Composition de caoutchouc vulcanisable au soufre comprenant une charge renforçante, caractérisée on ce qu'elle comporte au moins un polymère selon la revendication 17.

19. Enveloppe de pneumatique, caractérisée en ce qu'elle comporte une composition selon la revendication 18.
